# EUROPEAN PATENT APPLICATION

(11) **EP 0 657 345 A1**
(43) Date of publication of application: **14.06.1995**
(21) Application number: 94118285.9
(22) Date of filing: 22.11.1994
(51) Int. Cl.: B62M 9/12

(54) **Method to change the gears of a bicycle and the corresponding gear change mechanism to this operation**

(30) Priority: 10.12.1993 DE 4342236
(71) Applicant: Hetemov, Vladimir, Sofia 1000 (BG)
(72) Inventor: Hetemov, Vladimir, Sofia 1000 (BG)

(57) **Abstract**

A bicycle gear change mechanism has a front chain sprocket assembly (1) with at least two chain sprockets, a drive chain (19), a front derailleur (2) mounted to a carrying piece (10), a rear chain sprocket assembly (3) with at least two chain sprockets, a rear derailleur (4) mounted to a frame part (20), a chain straining device (13) including a carrying piece (5) with two tension pulleys (6), a parallelogram (7) and a carrying part (8). The rear sprocket assembly is provided with a free wheel coupling. The arrangement allows a gear shifting by rotating the drive chain backwards, that means the opposite direction to the chain drive direction.

## Description

The invention relates to a method to change the gears of a bicycle and the corresponding gear change mechanism to this operation.
Usually the chain sprocket assembly with a free wheel coupling in the back wheel hub is brought in rotation by means of a transmission drive chain. While changing a gear, the drive chain by means of a derailleur shifts sideways from one sprocket to the adjacent one, operation accompanied with a so called gear change resistance. The bigger the drive load applied to the chain sprocket and the derailleur by the drive chain the stronger the gear change resistance.
Gear change mechanisms of the above type do not allow a rapid gear change when going uphill, as the gear change resistance is strong.

The US-4127038 publication describes a gear change mechanism comprising pivotable chain sprocket parts, operating as a front derailleur. The publication 2652426 describes a free wheel gear change mechanism, allowing a gear shifting without a rotation of the pedals e.g. when going downhill. The inventions mentioned above do not solve the problem: a rapid gear shifting when driving uphill.
The DE-4208713 A1 describes a gear change mechanism which could be provided with auxilliary guiding parts to protect the chain from eventual axial displacement. The WO-9003305 A1 describes a gear change mechanism, which by disengage means coupled to the free wheel coupling, enables a gear shifting in the driving direction.
It is an object of the invention, to apply such a method of gear changing, which allows an effective and rapid shifting operation, by a relative simple, corresponding gear change mechanism.

A solution to this problem provide the characteristics included in claim 1. The gear shifting takes place by rotating the pedals backwards and the resulting rotation of the drive chain in the free wheel direction, as the rear sprocket assembly is provided with a free wheel coupling.

The following description related to the drawings explains the invention.
Fig. 1 is a side view showing a gear change mechanism mounted to a bicycle frame.
Fig. 2 is a front view of a chain straining device.

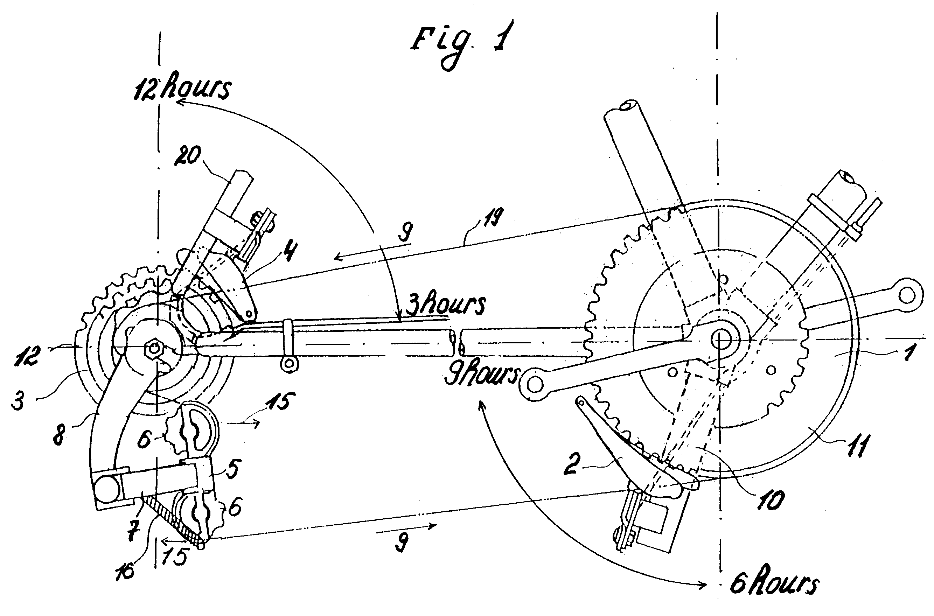

Referring to Fig. 1, there is shown a front derailleur 2, located opposite to the lower edge of the largest chain sprocket, in the area 6 - 9 hours clockwise and mounted to a carrying piece 10. This location of the derailleur allows a gear shifting by rotating the pedals backwards. In this case the invention uses the basic functioning principle of a derailleur, for instance the front derailleur 2 moves axially with respect to the rotating multistage front sprocket assembly and guides the drive chain from one sprocket to the other.
The same principle is applied to shift the chain to a sprocket of the rear multistage sprocket assembly. In this case as well the gear shifting occurs in the Backward free wheel direction The rear derailleur 4 is mounted to the bicycle frame 20, located in the area 12-3 hours clockwise, opposite to the upper edge of the largest chain sprocket.

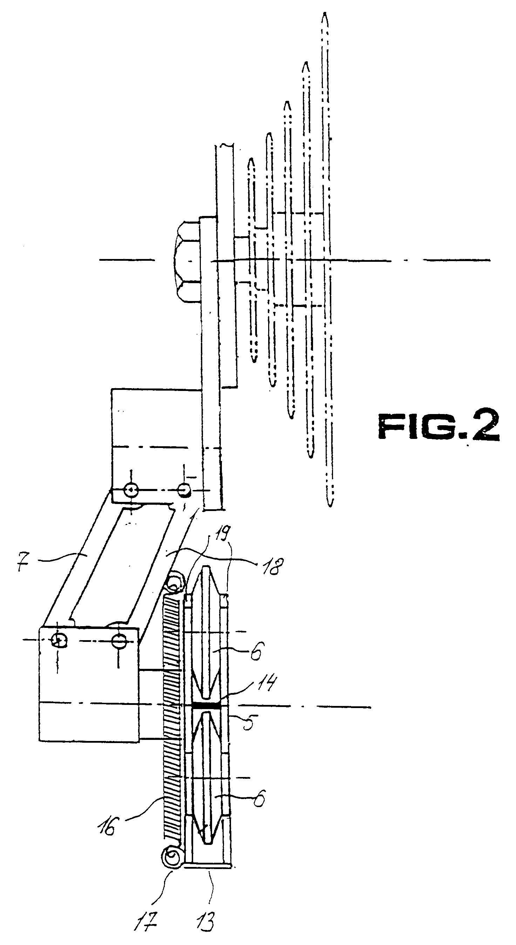

Referring to Fig. 2 , there is shown a chain straining device13 comprising two tension pulleys 6, which by means of a spring 16 are straining the chain in two opposite directions 15. The parallelogram 7 allows an axial motion of the pulleys, in order to stay in the plane of rotation of the drive chain.
The gear change mechanism described above provides a rapid gear shifting in different bicycle driving conditions, particularly when going uphill or even at standstill, what is especially usefull in city traffic conditions.

## Claims

1. A method to change the gears of a bicycle characterized in that said gear changing occurs, when rotating the drive chain (19) in the opposite direction (9) to the drive rotation direction, that means the free wheel direction. Fig. 1.

2. A gear change mechanism according to the method of operation of claim 1, comprising :
- a front chain sprocket assembly (1), with at least two chain sprockets, a chain (19), which by means of a front derailleur (2) is shifted from one chain sprocket to the adjacent one,
- a rear chain sprocket assembly (3), with at least two chain sprockets with a free wheel coupling, a chain (19), which by means of a rear derailleur (4) is shifted sideways from one chain sprocket to the adjacent one,
- a chain straining device (13) including a carrying piece (5) with two tension pulleys (6), a parallelogram (7) and a carrying part (8), characterized in, that said front derailleur (2) is mounted to a carrying piece (10) opposite to the lower edge side of the largest chain sprocket (11) in the area (6-9 hours) clockwise,
said rear derailleur (4) is mounted to the bicycle frame (20), and is located in the area (12-3 hours) clockwise, opposite to the upper edge of the largest chain sprocket (12). Fig. 1

3. A bicycle gear change mechanism according to claim 2, characterized in that said chain straining device (13) Fig. 2 includes two tension pulleys (6), mounted to a carrying piece (5) comprising two arms (19), said axle (14) connecting the parallelogram (7) with said carrying piece is located between the tension pulleys, allowing a strain of the chain tension in two directions (15), said chain straining device (13) is provided with a spring (16), which is attached to the remote end (17) of said carrying piece (5) and to the inner arm (18) of the parallelogram (7).

4. A bicycle gear change mechanism according to claim 2, characterized in that said front derailleur (2) and said rear derailleur (4) are from the "front derailleur"-type, with a chain guiding device comprising an inner plate, an outer plate, substantially parallel to each other and a linking part.
